# FASCICULE DE BREVET EUROPEEN

(11) **EP 3 212 959 B1**
(45) Date de publication et mention de la délivrance du brevet: **13.11.2019**
(21) Numéro de dépôt: 15780849.4
(22) Date de dépôt: 14.10.2015
(51) Int. Cl.: F16F 15/129

(54) **DISPOSITIF D'AMORTISSEMENT D'OSCILLATIONS DE TORSION**
VORRICHTUNG ZUR DÄMPFUNG VON TORSIONSSCHWINGUNGEN
DEVICE FOR DAMPING TORSIONAL OSCILLATIONS

(30) Priorité: 27.10.2014 FR 1460286
(43) Date de publication de la demande: 06.09.2017
(73) Titulaire: Valeo Embrayages, 80009 Amiens Cedex 2 (FR)
(72) Inventeur: BOITELLE, Maxence, F-62118 Biache Saint Vaast (FR); BAGARD, Didier, F-80009 Amiens (FR); MARECHAL, Olivier, F-80009 Amiens Cedex2 (FR)
(74) Mandataire: Cardon, Nicolas
(86) Numéro de dépôt international: PCT/EP2015/073748
(87) Numéro de publication internationale: WO 2016/066424

(56) Documents cités:
- EP-A1- 0 151 338
- DE-A1- 3 429 229
- DE-A1- 10 248 134
- DE-A1-102008 028 570
- DE-A1-102010 049 929
- DE-A1-102011 080 447

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Afin de filtrer des oscillations de torsion se propageant dans le système de transmission du fait des acyclismes du moteur thermique, il est connu d'utiliser un dispositif d'amortissement de ces oscillations de torsion présentant une unique fréquence de résonance, un tel dispositif étant encore appelé batteur. La demande WO 2011/060752 divulgue ainsi un batteur intégré dans un disque de friction et muni d'un système de génération d'hystérésis. Le système de génération d'hystérésis est formé par des rampes ménagées d'une part sur la masse de filtrage du batteur et par des contre-rampes portées par une rondelle et coopérant avec ces rampes lors de la rotation de cette masse de filtrage. Une masse de filtrage selon WO 2011/060752 est relativement complexe et coûteuse à réaliser.

La demande DE 10 2011 080 447 divulgue un batteur selon le préambule de la revendication 1.

Il existe un besoin pour bénéficier d'un dispositif d'amortissement d'oscillations de torsion qui soit relativement simple et peu coûteux à réaliser, tout en assurant un filtrage efficace des oscillations de torsion.

L'invention vise à répondre à ce besoin et elle y parvient, selon l'un de ses aspects, à l'aide d'un dispositif d'amortissement d'oscillations de torsion à unique fréquence de résonance selon la revendication 1.

Selon cet aspect de l'invention, la rampe n'est pas ménagée dans le composant secondaire, qui joue le rôle d'une masse de filtrage, mais elle est portée par une pièce distincte de ce dernier et solidaire de ce dernier. La rampe peut ainsi être réalisée dans une pièce spécifiquement choisie, notamment via ses dimensions, sa forme et le cas échéant le ou les matériaux dans lesquels elle est réalisée, pour participer à la réalisation de cette fonction d'hystérésis. Le composant secondaire, dans lequel cette rampe n'est pas réalisée, peut par ailleurs être plus simple et moins coûteux à réaliser.

La rampe peut être soit ménagée dans la pièce solidaire du composant secondaire, c'est-à-dire réalisée dans cette pièce solidaire, soit être ménagée dans une pièce additionnelle rapportée sur cette pièce solidaire du composant secondaire, étant par exemple formée par surmoulage sur la pièce solidaire du composant secondaire.

La contre-rampe peut être solidaire du composant primaire du dispositif d'amortissement d'oscillations de torsion, au moins sélectivement. En variante, la contre-rampe peut être en permanence solidaire du composant primaire du dispositif d'amortissement d'oscillations de torsion. Comme on le verra par la suite, la contre-rampe peut ainsi être :
- ménagée dans le composant primaire ou être ménagée dans une pièce rapportée sur ce composant primaire,
- ménagée dans une pièce solidaire du composant primaire tant qu'un limiteur de couple s'appliquant sur le composant primaire exerce une force de frottement maintenant ce dernier en position, par exemple sur un moyeu,
- ménagée dans une pièce solidaire du composant primaire, étant alors également solidaire d'un moyeu tant qu'un limiteur de couple s'appliquant sur le composant primaire exerce une force de frottement maintenant ce dernier en position sur ce moyeu.

Selon l'invention, la rampe peut être en permanence solidaire du composant secondaire tandis que la contre-rampe peut être au moins sélectivement solidaire, notamment en permanence solidaire, du composant primaire.

Le dispositif d'amortissement d'oscillations de torsion selon l'invention est encore appelé « batteur ». Un tel batteur est destiné à être intégré à un composant d'un système de transmission, tel qu'un disque de friction pour embrayage, un double volant amortisseur ou un convertisseur de couple hydrodynamique, et à être disposé hors du chemin emprunté par le couple transmis par ce composant. Le batteur peut permettre de remédier aux problèmes de broutement. La fréquence de résonance du batteur est par exemple comprise entre 6 Hz et 14 Hz, notamment entre 8 Hz et 14 Hz.

Le dispositif d'amortissement d'oscillations de torsion comprend par exemple une pluralité d'organes de rappel élastiques disposés entre le composant primaire et le composant secondaire, de manière à générer une force s'opposant à la rotation du composant secondaire par rapport au composant primaire. Le dispositif d'amortissement peut être tel que le composant secondaire ait une amplitude de rotation par rapport au composant primaire comprise entre 10° et 20°, cette amplitude de rotation étant de préférence comprise entre 14° et 18°.

Le système de génération d'hystérésis exerce par exemple sur le composant secondaire un couple compris entre 0,1 Nm et 2 Nm, la valeur maximale de couple d'hystérésis étant obtenue lorsque le composant secondaire tourne par rapport au composant primaire d'une valeur angulaire égale à l'amplitude de rotation.

La pièce solidaire du composant secondaire portant la rampe est une rondelle disposée axialement au-delà du composant secondaire et du composant primaire. Autrement dit, la rondelle peut être axialement en regard d'une face axiale d'extrémité du composant primaire et axialement en regard d'une face axiale d'extrémité du composant secondaire. Chaque organe de rappel élastique peut s'étendre entre deux extrémités. Chaque extrémité d'un organe de rappel élastique peut présenter une portion radialement intérieure apte à venir en appui contre une paroi du composant primaire et une portion radialement extérieure apte à venir en appui contre une paroi d'un nez radial du composant secondaire. Chaque nez radial du composant secondaire s'étend par exemple angulairement entre deux parois dudit nez et seule une de ces parois dudit nez peut alors être en regard d'un organe de rappel élastique et apte à venir au contact de ce dernier.

Le composant primaire peut définir une pluralité de logements dans chacun desquels est reçu au moins en partie un organe de rappel élastique. La paroi du composant primaire apte à contacter la zone radialement intérieure de l'extrémité angulaire d'un organe de rappel élastique appartient par exemple à une dent définissant une extrémité angulaire du logement pour un organe de rappel élastique.

Le composant primaire peut être monobloc ou être réalisé à l'aide de plusieurs pièces rigidement couplées entre elles.

Au sens de la présente demande :
- « axialement » signifie « parallèlement à l'axe de rotation »,
- « radialement » signifie « perpendiculairement à l'axe de rotation et le long d'un axe coupant cet axe de rotation »,
- « orthoradialement » signifie «perpendiculairement à une direction radiale, dans un plan perpendiculaire à l'axe de rotation », et
- « angulairement » signifie « autour de l'axe de rotation».

Selon un premier exemple de mise en œuvre de l'invention, la rondelle peut comprendre une portion s'étendant autour de l'axe et une pluralité de bras radiaux s'étendant depuis ladite portion.

« Bras radial » doit être compris de façon large, désignant un élément au moins globalement dirigé radialement.

La portion de la rondelle peut s'étendre continument autour de l'axe de rotation. En variante, cette portion de la rondelle ne s'étend pas continûment, une ou plusieurs fentes pouvant par exemple être prévue dans ladite portion, créant ainsi des discontinuités dans ladite portion.

Selon une première variante de ce premier exemple de mise en œuvre de l'invention, chaque bras radial peut faire saillie radialement vers l'axe de rotation depuis ladite portion de la rondelle.

Des trous peuvent être ménagés dans la portion de la rondelle s'étendant autour de l'axe, en regard de chaque bras radial, ces trous pouvant recevoir des moyens de solidarisation au composant secondaire, par exemple des rivets.

La portion de la rondelle s'étendant autour de l'axe de rotation peut s'étendre radialement autour de cet axe entre un bord radialement intérieur sensiblement circulaire et un bord radialement extérieur sensiblement circulaire également. Les bras radiaux peuvent prendre naissance au niveau du bord radialement intérieur de cette portion de la rondelle. Chaque bras peut présenter une extrémité libre qui est l'extrémité en regard de l'axe de rotation. Cette extrémité libre peut porter au moins une rampe. Chaque rampe peut être réalisée en modifiant localement la surface d'une extrémité libre d'un bras radial, par exemple par frappe à froid ou à chaud. Chaque rampe peut s'étendre orthoradialement. Les bras radiaux peuvent être uniformément répartis autour de l'axe de rotation.

Chaque bras radial présente par exemple plusieurs brins se succédant angulairement et séparés par un évidement. Chaque brin peut s'étendre globalement radialement ou ne s'étendre radialement que sur une portion de sa longueur, présentant des portions s'étendant orthoradialement. Les brins d'un même bras radial peuvent être réunis entre eux au niveau de l'extrémité libre dudit bras.

Selon une deuxième variante du premier exemple de mise en œuvre de l'invention, chaque bras radial peut faire saillie radialement en éloignement de l'axe de rotation depuis ladite portion de la rondelle. La portion de la rondelle s'étend par exemple entre un bord radialement intérieur circulaire et un bord radialement extérieur circulaire et chaque bras radial prend naissance sur le bord radialement extérieur de ladite portion de la rondelle. Chacun de ces bras radiaux peut comprendre une extrémité libre dans laquelle un trou apte à recevoir des moyens de solidarisation au composant secondaire est ménagé. Ces moyens de solidarisation sont par exemple des rivets.

Selon cette deuxième variante du premier exemple de mise en œuvre de l'invention, la portion de la rondelle s'étendant autour de l'axe peut être ondulée, présentant une position axiale variant angulairement. Selon cette deuxième variante, les ondulations de la portion de la rondelle s'étendant autour de l'axe de rotation forment une ou plusieurs rampes. Il n'est ainsi pas nécessaire de modifier localement la surface de la rondelle, par exemple par frappe, pour obtenir cette ou ces rampes.

Selon un deuxième exemple de mise en œuvre de l'invention, la pièce solidaire du composant secondaire portant la rampe est une rondelle dont la zone centrale est évidée et cette rondelle est dépourvue de bras radiaux, cette zone centrale contenant l'axe de rotation. La rampe est notamment ménagée dans la rondelle. Plusieurs rampes peuvent être ménagées dans la rondelle, ces rampes se succédant angulairement.

Selon ce deuxième exemple de mise en œuvre de l'invention, la rondelle peut présenter un bord radialement extérieur sensiblement circulaire et un bord radialement intérieur également sensiblement circulaire. La rondelle peut occuper une position axiale variant radialement. La portion radialement intérieure de la rondelle, qui comprend le bord radialement intérieur de la rondelle, peut être axialement décalée par rapport à la portion radialement extérieure de la rondelle, qui comprend le bord radialement extérieur de la rondelle. Ces portions radialement intérieure et radialement extérieure de la rondelle peuvent être reliées par une portion tronconique présentant une certaine élasticité permettant une déformation de la rondelle. La portion radialement intérieure de la rondelle peut alors porter les rampes tandis que des trous peuvent être ménagés sur la portion radialement extérieure de la rondelle, de manière à recevoir des moyens de solidarisation au composant secondaire, tels que des rivets. Les rampes peuvent être obtenues en modifiant localement la surface de la portion radialement intérieure de la rondelle, par exemple par frappe ou à chaud.

Dans tout ce qui précède, et notamment selon le premier exemple de mise en œuvre de l'invention, la contre-rampe avec laquelle coopère une rampe peut être ménagée dans le composant primaire du dispositif. Dans ce cas, on évite d'avoir recours à des pièces supplémentaires pour réaliser cette contre-rampe, contrairement à ce qui est par exemple enseigné dans la demande WO 2011/060752 qui nécessite deux pièces plastiques supplémentaires pour réaliser la contre-rampe. Plusieurs contre-rampes se succédant angulairement sont par exemple ménagées dans le composant primaire du dispositif.

Selon une variante, et notamment selon le deuxième exemple de mise en œuvre de l'invention, la contre-rampe peut être ménagée dans une pièce de frottement, la pièce solidaire du composant secondaire étant disposée axialement entre le composant secondaire et cette pièce de frottement. Autrement dit, la contre-rampe est alors disposée en regard du côté de la rondelle opposé au côté de la rondelle en regard duquel est disposé le composant secondaire. Selon cette variante, plusieurs contre-rampes se succédant angulairement peuvent être ménagées dans la pièce de frottement. La pièce de frottement peut être, au moins sélectivement ou en permanence, solidaire du composant primaire.

Dans tout ce qui précède, le nombre de contre-rampes peut être égal au nombre de rampes.

Dans tout ce qui précède, chaque rampe peut faire saillie en direction de la contre rampe, présentant notamment un profil convexe tandis que chaque contre-rampe présente alors un profil concave. L'inverse est possible, chaque contre-rampe faisant alors saillie en direction de la rampe, chaque contre-rampe présentant notamment un profil convexe tandis que chaque rampe présente alors un profil concave.

Toutes les contre-rampes peuvent avoir la même forme. Toutes les rampes peuvent avoir la même forme.

Dans tout ce qui précède, la ou les rampes peuvent être disposées radialement intérieurement par rapport au composant secondaire du batteur, c'est-à-dire qu'elles sont situées à une distance radiale de l'axe de rotation qui est inférieure à la distance radiale la plus petite entre le composant secondaire du batteur et l'axe de rotation.

L'invention a encore pour objet, selon un autre de ses aspects, un disque de friction pour embrayage, comprenant :
- au moins une garniture de friction définissant une entrée en couple,
- un moyeu mobile en rotation autour de l'axe de rotation mentionné ci-dessus et définissant une sortie en couple,
- le dispositif d'amortissement d'oscillations de torsion tel que défini ci-dessus, étant porté par le moyeu et disposé hors du chemin emprunté par le couple transmis par le disque de friction entre l'entrée en couple et la sortie en couple.

L'intégration du dispositif d'amortissement d'oscillations de torsion au sein d'un disque de friction n'est qu'un exemple parmi d'autres, le dispositif d'amortissement pouvant en variante être intégré à un double volant amortisseur ou à un convertisseur hydrodynamique de couple, ou à une inertie primaire tel qu'un volant.

Dans le cas d'un disque de friction, la rondelle solidaire du composant secondaire et dans laquelle sont ménagées la ou les rampes peut être axialement disposée entre un support de garniture(s) de friction et le composant secondaire.

Toujours dans le cas d'un disque de friction, lorsque la ou les contre-rampes sont ménagées dans la pièce de frottement, cette dernière peut être axialement disposée entre le support de garniture(s) de friction et la rondelle portant la ou les rampes. On peut donc trouver successivement axialement : le support de garniture(s), la pièce de frottement, la rondelle solidaire du composant secondaire, et le composant secondaire.

Toujours dans le cas d'un disque de friction avec la ou les contre-rampes ménagées dans la pièce de frottement, cette dernière peut être montée sur le moyeu, étant notamment solidaire en rotation du composant primaire du dispositif d'amortissement d'oscillations de torsion ou du moyeu.

Le disque peut comprendre un limiteur de couple disposé de manière à exercer une force de frottement sur le dispositif d'amortissement d'oscillations de torsion, cette force maintenant le composant primaire du dispositif d'amortissement d'oscillations de torsion solidaire en rotation du moyeu tant que le couple exercé par ce dispositif sur le limiteur de couple est inférieur à une valeur prédéfinie.

Dans ce cas, tant que la force de frottement mentionnée ci-dessus maintient le composant primaire solidaire en rotation du moyeu, le composant secondaire peut osciller par rapport au composant primaire. Au-delà de la valeur de couple prédéfinie, le dispositif d'amortissement glisse par rapport au moyeu, dissipant ainsi l'énergie associée au couple qu'il subit. La valeur prédéfinie de couple au-delà de laquelle le glissement du dispositif d'amortissement se produit est par exemple comprise entre 4 Nm et 8 Nm, étant par exemple de l'ordre de 5 Nm.

Le limiteur de couple peut être disposé de manière à exercer une force de frottement uniquement radiale sur le batteur, notamment selon la première variante du premier exemple de mise en œuvre de l'invention. Le limiteur de couple peut alors être une rondelle disposée radialement entre le composant primaire du dispositif d'amortissement et le moyeu, et solidarisant ces derniers en rotation tant que le couple exercé par le dispositif d'amortissement sur le limiteur de couple est inférieur à la valeur prédéfinie. On évite ainsi de rajouter de l'encombrement axial au disque de friction. Le limiteur de couple peut être formé par une rondelle élastiquement déformable. A l'état libre, cette rondelle peut présenter une forme proche d'un carré, cette forme étant modifiée lorsque la rondelle est introduite entre le moyeu et le dispositif d'amortissement. La rondelle peut être réalisée en acier ressort, par exemple en C67S. La rondelle élastique peut le cas échéant être fendue.

Dans un tel cas, le disque peut comprendre un organe de butée pour le déplacement axial du dispositif d'amortissement d'oscillations de torsion en éloignement de la garniture de friction, cet organe de butée étant par exemple un circlip monté sur le moyeu.

En variante, et notamment selon la deuxième variante du premier exemple de mise en œuvre de l'invention ou selon le deuxième exemple de mise en œuvre de l'invention, le limiteur de couple peut être disposé de manière à exercer une force de frottement uniquement axiale sur le batteur. Le limiteur de couple est par exemple formé par une rondelle de forme discoïde dont la zone centrale est évidée selon un disque de rayon plus petit. Une pluralité de fentes peut être ménagée dans la pièce de frottement, de manière à conférer à cette dernière plus de flexibilité. Cette rondelle peut être déformée lors de son montage sur le disque de friction, de manière à exercer la force de frottement axiale sur le dispositif d'amortissement d'oscillations de torsion. Un tel limiteur est avantageusement configuré pour former une butée pour le déplacement axial du dispositif d'amortissement d'oscillations de torsion en éloignement de la garniture de friction.

Le moyeu peut définir au moins un épaulement configuré pour former une butée pour le déplacement axial du dispositif d'amortissement d'oscillations de torsion en rapprochement de la garniture de friction. Dans le cas où la pièce de frottement mentionnée ci-dessus est présente, cette dernière peut reposer contre l'épaulement, de sorte que le déplacement axial du dispositif d'amortissement est limité en rapprochement de la garniture de friction par cette pièce de frottement, qui est elle-même bloquée en rapprochement de la garniture par l'épaulement.

La butée pour le déplacement axial du batteur en éloignement de la garniture de friction et la butée pour le déplacement axial du batteur en rapprochement de la garniture de friction peuvent coopérer entre elles de manière à ce que le batteur soit maintenu axialement dans une position prédéfinie, cette position prédéfinie correspondant à la position entre les deux butées mentionnées ci-dessus. Le batteur peut ainsi être axialement immobilisé par rapport au moyeu.

Aucune des butées pour le déplacement axial du batteur ne fait par exemple intervenir un appui axial élastique, le batteur n'étant par exemple pas en butée contre une pièce maintenue axialement par un accumulateur d'énergie tel qu'un ou plusieurs ressorts, contrairement à ce qui est enseigné par exemple dans la demande WO2011/060752 en référence à l'élément référencé (17) sur la figure 1 de cette demande.

Le disque de friction peut être dépourvu de tout amortisseur d'oscillations de torsion autre que le dispositif d'amortissement d'oscillations de torsion ou « batteur » précité, auquel cas le support de garniture(s) de friction est solidaire en rotation du moyeu.

En variante, le disque de friction peut comprendre un support de garniture(s) de friction mobile en rotation par rapport au moyeu et un amortisseur d'oscillations de torsion, autre que le dispositif d'amortissement d'oscillations de torsion précité, et disposé entre le support de garniture(s) de friction et le moyeu et s'opposant à la rotation de ce support par rapport au moyeu. Cet amortisseur d'oscillations de torsion comprend par exemple une pluralité de ressorts. Dans un tel cas, le limiteur de couple du disque de friction est de préférence le limiteur de couple agissant exclusivement radialement décrit ci-dessus.

L'invention pourra être mieux comprise à la lecture de la description qui va suivre d'exemples non limitatifs de mise en œuvre de celle-ci et à l'examen du dessin annexé sur lequel :
- la figure 1 est une vue en perspective d'un disque de friction avec batteur selon une première variant d'un premier exemple de mise en œuvre de l'invention,
- la figure 2 est une vue de dessus du disque de la figure 1,
- la figure 3 est une vue de dessous du disque de la figure 1,
- la figure 4 représente de façon isolée le batteur du disque de la figure 1,
- la figure 5 représente de façon isolée la rondelle du batteur de la figure 1 sur laquelle sont ménagées les rampes du système de génération d'hystérésis,
- la figure 6 est une vue similaire à la figure 3 d'un autre batteur selon la première variante du premier exemple de mise en œuvre de l'invention,
- la figure 7 représente de façon isolée une partie du composant primaire du batteur selon la première variante du premier exemple de mise en œuvre de l'invention,
- la figure 8 est une en coupe dans un plan contenant l'axe de rotation d'un disque de friction avec batteur selon un deuxième exemple de mise en œuvre de l'invention,
- la figure 9 est une vue similaire à la figure 8 mais dans un plan de coupe décalé angulairement par rapport à celui de la figure 8,
- la figure 10 est une vue similaire à la figure 2 du disque selon le deuxième exemple de mise en œuvre de l'invention,
- la figure 11 est une vue en agrandi d'une partie de la figure 10, sur laquelle le limiteur de couple n'est pas représenté,
- la figure 12 est une vue en perspective du disque de la figure 10,
- la figure 13 est une vue similaire à la figure 3 du disque selon le deuxième exemple de mise en œuvre de l'invention,
- la figure 14 est une vue en éclaté du batteur selon le deuxième exemple de mise en œuvre de l'invention,
- la figure 15 représente le disque de friction selon le deuxième exemple de mise en œuvre de l'invention, la majeure partie des éléments du batteur n'étant pas représentés sur cette figure,
- les figures 16 et 17 montrent respectivement à l'état monté et au repos la rondelle utilisée comme limiteur de couple pour le disque de friction selon le deuxième exemple de mise en œuvre de l'invention,
- les figures 18 et 19 sont des vues respectivement similaires aux figures 8 et 9 d'un disque de friction avec batteur selon une deuxième variante du premier exemple de mise en œuvre de l'invention,
- la figure 20 est une vue en éclaté du batteur selon la deuxième variante du premier exemple de mise en œuvre de l'invention, et
- la figure 21 représente de façon isolée la rondelle du batteur de la figure 20 sur laquelle sont ménagées les rampes du système de génération d'hystérésis.

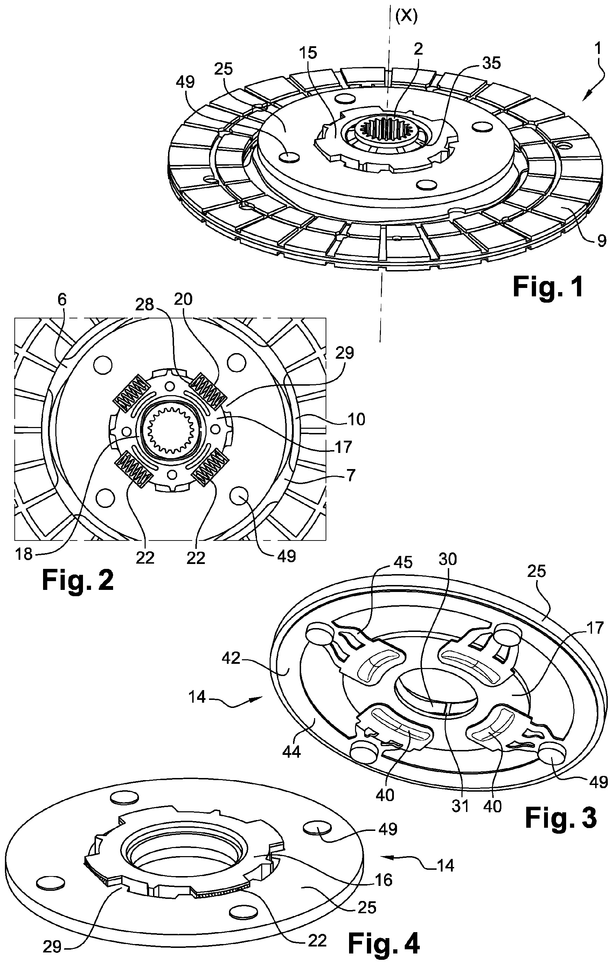

On a représenté sur la figure 1 un disque de friction 1 pour embrayage d'un système de transmission de véhicule automobile. Ce disque de friction 1 comprend dans l'exemple considéré un moyeu 2 apte à entraîner en rotation autour d'un axe X un arbre non représenté d'une boîte de vitesses au moyen de cannelures 3.

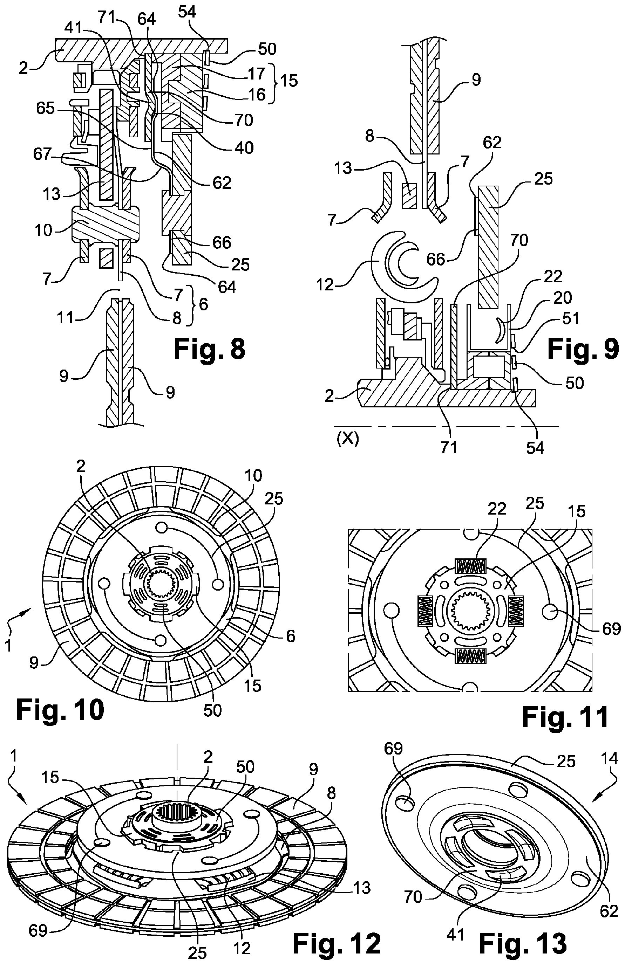

Le disque de friction 1 comprend un support de garnitures de friction 6, mieux visible sur les figures 8 et 9. Le support 6 est dans l'exemple considéré en plusieurs parties. Deux rondelles de guidage 7 espacées axialement, de forme sensiblement identique et solidarisées entre elles via des rivets 10, s'étendent radialement depuis le moyeu 2, et une plaque 8 supportant des garnitures de friction 9 est rivetée sur une de ces rondelles 7, par exemple via les rivets 10. Cette plaque 8 s'étend radialement extérieurement par rapport aux rondelles 7. Une pluralité de découpés 11 de même forme et ménagées dans la plaque 8 se succèdent par exemple autour de l'axe X.

Comme on peut notamment mieux le voir sur les figures 8 et 9, le disque 1 peut comprendre un amortisseur d'oscillations de torsion disposé entre le moyeu 2 et le support 6. Cet amortisseur d'oscillations de torsion comprend par exemple une pluralité de ressorts 12 reçus d'une part dans des logements ménagés dans les rondelles de guidage 7, et d'autre part dans des logements ménagés dans un voile 13 solidaire en rotation du moyeu 2. Les ressorts 12 permettent ainsi d'amortir une partie des oscillations de torsion entre les garnitures de friction 9, qui forment l'entrée en couple du disque de friction 1, et le moyeu 2 qui forme la sortie en couple du disque de friction 1.

Le disque de friction 1 comprend encore un dispositif 14 d'amortissement des oscillations de torsion. Le dispositif 14 est ici un batteur, c'est-à-dire qu'il est situé hors du chemin emprunté par le couple que transmet le disque 1 depuis les garnitures de friction 9 jusqu'au moyeu 2, et qu'il comprend une unique fréquence de résonance. La fréquence de résonance du batteur 14 est dans l'exemple considéré comprise entre 8 Hz et 14 Hz.

Le batteur 14 comprend dans l'exemple considéré un composant primaire 15 disposé autour du moyeu 2. Dans l'exemple des figures 1 à 7, un espace radial 18 est ménagé entre ce composant 15 et le moyeu 2.

Dans l'exemple décrit, le composant primaire 15 est réalisé en deux parties 16 et 17 qui sont solidarisées entre elles et qui se succèdent globalement le long de l'axe X. La partie 17 du composant primaire 15 est celle qui est axialement la plus proche des garnitures de friction 9.

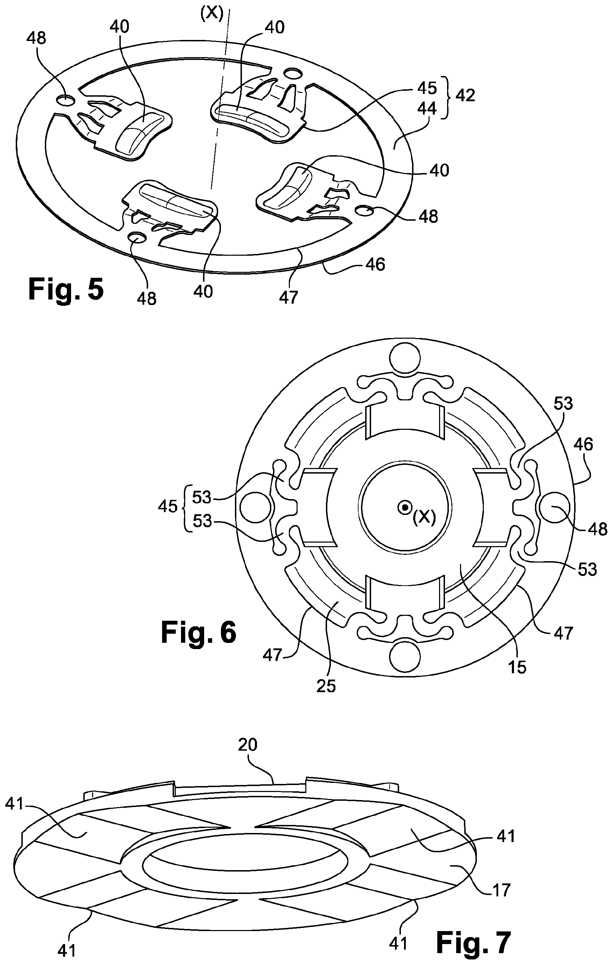

Comme on peut le voir sur la figure 2, sur laquelle la partie 16 n'est pas représentée, et sur la figure 7 qui représente cette partie 17 de façon isolée, la partie 17 présente sur sa face axialement en regard de la partie 16 des découpes coopérant avec des découpes de forme complémentaire ménagées sur la face de la partie 16 axialement en regard de la partie 17 pour définir des logements 20. Ces logements 20 reçoivent des organes de rappel élastique qui sont ici des ressorts 22 interposés entre le composant primaire 15 et un composant secondaire 25. Le composant secondaire 25 forme une masse de filtrage qui sera décrite plus précisément par la suite. Le composant secondaire 25 est mobile en rotation par rapport au composant primaire 15 autour de l'axe X, les ressorts 22 s'opposant à cette rotation du composant secondaire 25 par rapport au composant primaire 15 en en limitant le débattement. L'amplitude de rotation du composant secondaire 25 par rapport au composant primaire 15 est dans l'exemple considéré comprise entre 14° et 18°.

Dans l'exemple considéré, les ressorts 22 sont quatre ressorts droits se succédant angulairement, chaque ressort 22 étant reçu dans un logement 20. Le ressort unique modélisant l'ensemble des ressorts 22 du batteur 14 présente par exemple un coefficient de raideur angulaire compris entre 0.02 Nm/° à 0.1 Nm/°. Chaque ressort 22 s'étend ici entre deux extrémités angulaires et chaque extrémité angulaire présente une zone radialement intérieur apte à venir en appui contre une paroi radiale du logement 20 et une zone radialement extérieure apte à venir en appui contre une paroi 28 d'un nez 29 du composant secondaire 25 faisant radialement saillie vers l'intérieur.

Comme représenté sur les figures 1 à 4, le composant secondaire 25 s'étend globalement radialement extérieurement par rapport au composant primaire 15. Le composant secondaire 25 définit une masse qui présente par exemple un moment d'inertie compris entre 0.0005 et 0.002 kg.m².

Le disque de friction 1 des figures 1 à 4 comprend encore un limiteur de couple 30 qui va maintenant être décrit. Le limiteur de couple 30 est ici une rondelle élastiquement déformable qui est introduite dans l'espace radial 18. Comme on peut notamment le voir sur la figure 3, la rondelle élastiquement déformable 30 présente dans l'exemple décrit une fente 31. Une fois introduite dans l'espace radial 18, la rondelle élastiquement déformable 30 présente, comme c'est visible sur la figure 3, successivement angulairement une alternance de zones en contact avec le moyeu 2 et de zones en contact avec le composant primaire 15 du batteur 14.

Tant que le couple appliqué sur le batteur 14 est inférieur à une valeur prédéfinie, qui est par exemple comprise entre 4 Nm et 8 Nm, le limiteur de couple 30 exerce une force de frottement radiale maintenant le composant primaire 15 du batteur 14 solidaire du moyeu 2. Le limiteur de couple 30 des figures 1 à 4 est conçu pour agir exclusivement radialement sur le batteur 14, c'est-à-dire que la force de frottement qu'il exerce sur le composant primaire 15 du batteur 14 est dépourvue de composante autre que la composante radiale.

En revanche, lorsque le couple appliqué sur le batteur 14 devient trop important, par exemple lorsque le batteur 14 est excité à sa fréquence de résonance, le couple qu'il exerce sur le limiteur de couple 30 dépasse la valeur prédéfinie. Le composant primaire 15 du batteur 14 glisse alors par rapport au moyeu 2, ce qui permet de dissiper l'énergie générée dans le batteur 14, et donc de protéger ce dernier.

Le batteur 14 est maintenu en position axiale sur le moyeu 2 :
- d'une part grâce à un circlip 35 notamment visible sur la figure 1, et qui forme une butée pour le déplacement axial du batteur 14 en éloignement de la garniture de friction 9, et
- d'autre part grâce à un épaulement du moyeu non visible sur les figures 1 et 4, et qui forme une butée pour le déplacement axial du batteur 14 en rapprochement de la garniture de friction.

Le batteur 14 peut venir directement en butée contre cet épaulement ou venir en butée contre une pièce elle-même en butée contre cet épaulement du moyeu 2.

Le batteur 14 comprend selon l'invention un système de génération d'hystérésis pour le déplacement du composant secondaire 25 par rapport au composant primaire 15 qui va maintenant être décrit. Ce système de génération d'hystérésis comprend au moins une rampe 40 ménagée dans une pièce 42 solidaire du composant secondaire 25 et interagissant par frottement avec une contre-rampe 41 lors de la rotation du composant secondaire 25 par rapport au composant primaire 15.

La pièce 42 est ici axialement en regard du composant primaire 15 et du composant secondaire 25 du batteur 14. La pièce 42 est dans l'exemple des figures 1 à 7 axialement disposée entre le voile 13 et le composant primaire 15 du batteur 14.

Dans l'exemple des figures 1 à 8, la pièce 42 solidaire du composant secondaire 25 est une rondelle comprenant : une portion 44 s'étendant continument autour de l'axe X, et une pluralité de bras radiaux 45 faisant saillie radialement vers l'intérieur, c'est-à-dire vers l'axe X, depuis ladite portion 44. La rondelle 42 présente dans l'exemple décrit quatre bras radiaux 45 répartis uniformément autour de l'axe X, chaque bras radial 45 étant associé à une rampe 40.

Comme on peut le voir notamment sur les figures 3 et 5, la portion 44 peut présenter un bord radialement extérieur 46 circulaire et un bord radialement intérieur 47 circulaire. Une pluralité de trous 48 sont ménagés dans la portion 44 en regard de chaque bras radial 45. Chacun de ces trous 48 reçoit un moyen de solidarisation 49 de la rondelle 42 au composant secondaire 25 du batteur 14, comme représenté sur la figure 3. Les moyens de solidarisation 49 sont par exemple des rivets.

Comme représenté, chaque bras radial 45 prend naissance au niveau du bord radialement intérieur 47 de la portion 44. Chaque bras 45 comprend dans l'exemple décrit trois brins distincts 53, chaque brin 53 s'étendant globalement radialement entre une extrémité radiale au niveau d'un trou 48 et une extrémité radiale libre sur laquelle est ménagée une rampe 40. A part au niveau de leurs extrémités radiales, qui leur sont communes, les brins 53 d'un même bras radial sont angulairement décalés, étant deux à deux séparés par un évidement.

Chaque rampe 40 peut avoir la même forme, s'étendant dans l'exemple des figures 3 et 5 angulairement sur un angle compris entre 10° et 30°. Chaque rampe 40 fait dans l'exemple décrit saillie en direction du composant primaire 15 du batteur 14. La face de chaque bras radial 45 en regard du composant primaire 15 présente ici au niveau de chaque rampe 40 un profil convexe, ce profil étant d'abord croissant depuis une extrémité de la rampe jusqu'à un maximum avant de décroître jusqu'à l'autre extrémité angulaire de la rampe 40.

Chaque rampe 40 est par exemple réalisée par modification locale de la surface de l'extrémité libre de chaque bras radial 45, par exemple par frappe. En variante, chaque rampe 40 peut être réalisée par dépôt de matière sur l'extrémité libre de chaque bras radial 45, par exemple par surmoulage.

L'exemple représenté sur la figure 6 diffère de celui des figures 3 et 5 par le fait que chaque bras radial 45 ne comporte que deux brins 53 et par le fait que ces derniers ne s'étendent pas uniquement radialement vers l'axe X depuis leur extrémité naissant sur le bord radialement intérieur 47 de la portion 44 jusqu'à leur extrémité libre au niveau de laquelle est ménagée la rampe 40. Chaque brin 53 présente par exemple successivement depuis son extrémité naissant sur le bord 47 : une portion s'étendant radialement vers l'intérieur, une portion s'étendant angulairement vers l'autre brin 53 du bras 45, une portion s'étendant radialement vers l'extérieur, et une portion s'étendant radialement vers l'intérieur jusqu'à l'extrémité libre commune à l'autre brin 53 du bras 45 et au niveau de laquelle est ménagée la rampe 40. Chaque rampe 40 selon cet exemple est par exemple similaire à celles décrites en référence aux figures 3 et 5.

Chaque rampe 40 interagit avec une contre-rampe 41 lors de la rotation du composant secondaire 25 par rapport au composant primaire 15, contre-rampes 41 qui vont maintenant être décrites. Dans l'exemple des figures 1 à 7, les contre-rampes 41 sont ménagées dans la face du composant primaire 15 en regard de la rondelle 42. Plus précisément, ces rampes sont ménagées dans la pièce 17 représentée de façon isolée sur la figure 7, et font axialement face à la rondelle 42. Quatre contre-rampes 41 sont ménagées dans la partie 17 dans l'exemple considéré, ces quatre contre-rampes 41 se succédant angulairement.

Chaque contre-rampe peut être ménagée angulairement sur un angle compris entre 10° et 30°. Chaque contre-rampe 41 présente ici la même forme. La face de la partie 17 radialement en regard de la rondelle 42 présente un profil concave au niveau de chaque contre-rampe 41, ce profil décroissant depuis une extrémité angulaire de la contre-rampe 41 jusqu'à un minimum avant de croître jusqu'à l'autre extrémité de cette contre-rampe 41.

Grâce aux rampes 40 et aux contre-rampes 41, un système de génération d'hystérésis est créé. Lors de la rotation du composant secondaire 25 du batteur 14 par rapport au composant primaire 15, le composant primaire 15 exerce en effet sur le composant secondaire 25, via les contre-rampes 41 qui vont déformer les rampes 40 de la rondelle 42 solidaire du composant secondaire 25, un couple de frottement ou d'hystérésis variable. Les formes des rampes et des contre-rampes sont par exemple choisies de manière à ce que le couple d'hystérésis soit maximal lorsque le composant secondaire 25 se déplace par rapport au composant primaire 15 selon son amplitude de rotation. Cette valeur maximale de couple d'hystérésis est par exemple de l'ordre de 2 Nm.

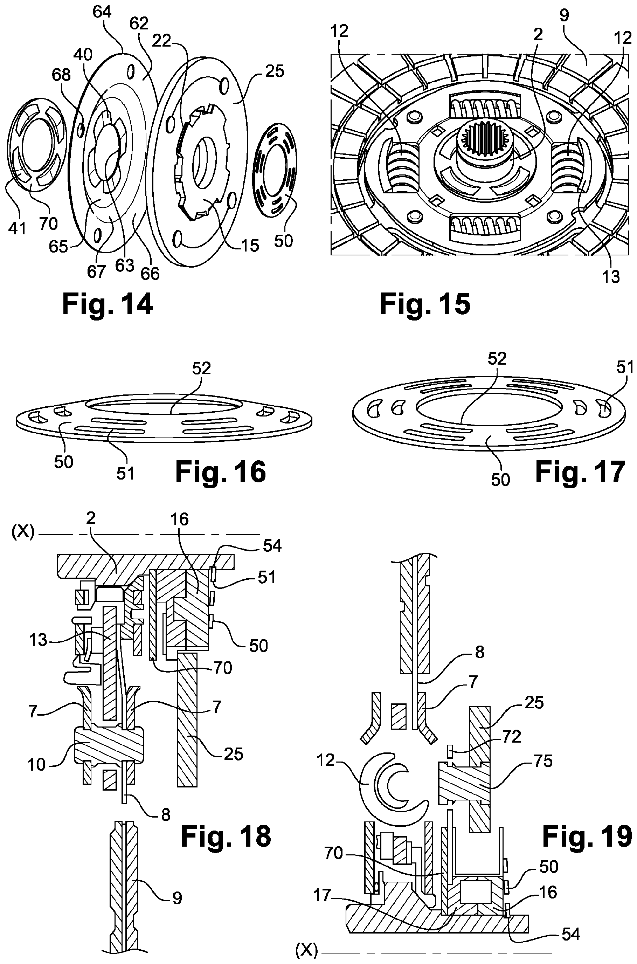

Le batteur 14 selon le premier exemple de mise en œuvre de l'invention peut encore être autre, comme on le verra ultérieurement en référence aux figures 18 à 21.

On va maintenant décrire en référence aux figures 8 à 17 un disque de friction 1 selon un deuxième exemple de mise en œuvre de l'invention. Le disque de friction 1 des figures 8 à 17 diffère de celui qui vient d'être décrit en référence aux figures 1 à 7 notamment par son limiteur de couple et par le système de génération d'hystérésis.

Le limiteur de couple du disque de friction selon le deuxième exemple de mise en œuvre de l'invention agit axialement, contrairement au limiteur de couple 30 décrit en référence aux figures 1 à 7 qui agit radialement. Le limiteur de couple des figures 8 à 17 est conçu pour agir exclusivement axialement sur le batteur 14, c'est-à-dire que la force de frottement qu'il exerce sur le composant primaire 15 du batteur 14 est dépourvue de composante autre que la composante axiale.

Le limiteur de couple selon le deuxième exemple de mise en œuvre de l'invention est réalisé à l'aide d'une rondelle élastique 50 représentée sur la figure 17 au repos et sur la figure 16 à l'état comprimé lorsqu'elle est montée dans le disque de friction 1. Cette rondelle 50 présente, comme représenté sur ces figures 16 et 17 une forme discoïde avec une zone intérieure évidée selon un disque de rayon plus petit. Plusieurs fentes 51 sont ménagées dans cette rondelle, permettant d'accroître la flexibilité de la rondelle 50. Dans l'exemple considéré, deux rangées de fentes 51 sont ménagées angulairement.

Le bord radialement intérieur circulaire 52 de la rondelle est monté dans une gorge 54 ménagée dans le moyeu 2, cette gorge 54 étant par exemple visible sur les figures 8 et 9.

Lorsqu'elle est en place sur le disque de friction, la rondelle 50 est comprimée, comme représenté sur les figures 8, 9 et 16, de sorte qu'elle exerce une force de frottement axiale sur le composant primaire 15 du batteur 14, de manière à maintenir ce dernier solidaire du moyeu tant que le couple exercé par le composant primaire sur cette rondelle 50 est inférieur à une valeur prédéfinie. Similairement à ce qui a été mentionné en référence au premier exemple de mise en œuvre de l'invention, la valeur prédéfinie est par exemple comprise entre 4 Nm et 8 Nm. En revanche, lorsque le couple appliqué sur le batteur 14 devient trop important, par exemple lorsque le batteur 14 est excité à sa fréquence de résonance, le couple qu'il exerce sur le limiteur de couple 50 dépasse la valeur prédéfinie. Le composant primaire 15 du batteur 14 glisse alors par rapport au moyeu 2, ce qui permet de dissiper l'énergie générée dans le batteur 14, et donc de protéger ce dernier.

La rondelle 50 formant le limiteur de couple du disque de friction 1 forme par ailleurs une butée pour le déplacement du batteur 14 en éloignement des garnitures de friction 9, le circlip 35 selon le premier exemple de mise en œuvre de l'invention des figures 1 à 7 n'étant alors plus nécessaire pour réaliser cette butée.

Le système de génération d'hystérésis selon ce deuxième exemple de mise en œuvre de l'invention va maintenant être décrit.

Similairement au système de génération d'hystérésis selon le premier exemple de mise en œuvre de l'invention, les rampes 40 sont ménagées sur une pièce 62 solidaire du composant secondaire 25 du batteur 14. La pièce 62 est également une rondelle qui est différente de celle décrite précédemment. Comme on peut le voir sur les figures 13 et 14, la rondelle 62 est ici dépourvue de bras faisant saillie radialement. La rondelle 62 s'étend selon ce deuxième exemple de mise en œuvre radialement entre un bord radialement intérieur 63 sensiblement circulaire et un bord radialement extérieur 64 sensiblement circulaire. La rondelle 62 est évidée radialement en deçà du bord 63, de manière à définir une zone centrale recevant l'axe de rotation X.

La rondelle 62 présente une portion radialement intérieure 65, qui comprend le bord radialement intérieur 63, décalée axialement par rapport à sa portion radialement extérieure 66, qui comprend le bord radialement extérieur 64. La portion radialement intérieure 65 de la rondelle 62 est, comme on peut le voir sur la figure 8, axialement plus proche du support 6 des garnitures de friction 9 que la portion radialement extérieure 66 ne l'est. Sur la figure 9, cette portion radialement intérieure 65 n'est pas représentée, bien qu'étant présente dans ce plan de coupe. La portion radialement intérieure 65 est reliée à la portion radialement extérieure 66 par une portion tronconique 67 présentant une élasticité permettant à la rondelle 62 de se déformer. La portion radialement extérieure 66 présente des trous 68 qui, similairement aux trous 48 précédemment décrits, peuvent recevoir des rivets 69 pour solidariser la rondelle 62 au composant secondaire 25.

Comme représenté sur la figure 8 et sur la figure 14, les rampes 40 sont ménagées dans la portion radialement intérieure 65 à proximité du bord radialement intérieur 63. Les rampes 40 se succèdent angulairement. La face de la portion 65 de la rondelle tournée vers le support 6 des garnitures de friction 9 présente une forme concave au niveau de chaque rampe 40.

Selon ce deuxième exemple de mise en œuvre de l'invention, les contre rampes 41 ne sont pas formées dans le composant primaire 15 du batteur 14 mais dans une pièce de frottement 70. La rondelle 62 est ici axialement disposée entre le composant secondaire 25 et la pièce de frottement 70. Comme représenté sur les figures 8 et 9, la pièce de frottement 70 vient en appui contre un épaulement 71 ménagé dans le moyeu 2, de manière à former une butée pour le déplacement du batteur 14 en rapprochement du support 6 des garnitures de friction 9. Cette butée coopère avec le limiteur de couple 50 pour immobiliser axialement le batteur 14.

La pièce de frottement 70 est plus particulièrement visible sur la figure 15 sur laquelle le reste du batteur 14 n'est pas représenté. Plusieurs contre-rampes 41 se succédant angulairement sont formées sur cette pièce 70. Les contre-rampes 41 font saillie en direction de la rondelle 62. La face de la pièce de frottement 70 en regard de la rondelle 62 présente par exemple une forme convexe au niveau des contre rampes 41. La pièce de frottement 70 est dans l'exemple considéré solidaire en rotation du composant primaire 15 du batteur 14. La pièce de frottement 70 est alors solidaire en rotation du moyeu 2 tant que le limiteur de couple 50 maintient le composant primaire 15 immobile par rapport au moyeu 2.

Le système de génération d'hystérésis selon ce deuxième exemple de mise en œuvre de l'invention met en œuvre des rampes 40 solidaires du composant secondaire 25 du batteur et des contre-rampes 41 solidaires du composant primaire 15 du batteur 14.

Lors de la rotation du composant secondaire 25 du batteur par rapport au composant primaire 15, le composant primaire 15 exerce sur le composant secondaire 25, via les contre-rampes 41 qui vont déformer les rampes 40 de la rondelle 42 solidaire du composant secondaire 25, un couple de frottement ou d'hystérésis variable. Les formes des rampes et des contre-rampes sont par exemple choisies de manière à ce que le couple d'hystérésis soit maximal lorsque le composant secondaire 25 se déplace par rapport au composant primaire 15 selon son amplitude de rotation. Cette valeur maximale de couple d'hystérésis est par exemple de l'ordre de 2 Nm.

On va maintenant décrire en référence aux figures 18 et 19 un disque de friction selon une deuxième variante du premier exemple de mise en œuvre de l'invention. Cette deuxième variante diffère de la première variante du premier exemple de mise en œuvre de l'invention notamment par le fait qu'elle comprend un limiteur de couple 50 selon le deuxième exemple de mise en œuvre de l'invention, agissant exclusivement axialement.

Selon cette deuxième variante, la rondelle 72 comprend des bras radiaux 73 faisant saillie en éloignement de l'axe de rotation X depuis le bord radialement extérieur 46 de la portion 44. Chacun de ces bras radiaux 73 présente au niveau de son extrémité libre un trou 74 apte à recevoir un rivet 75 pour solidariser la rondelle 72 au composant secondaire 25 du batteur 14.

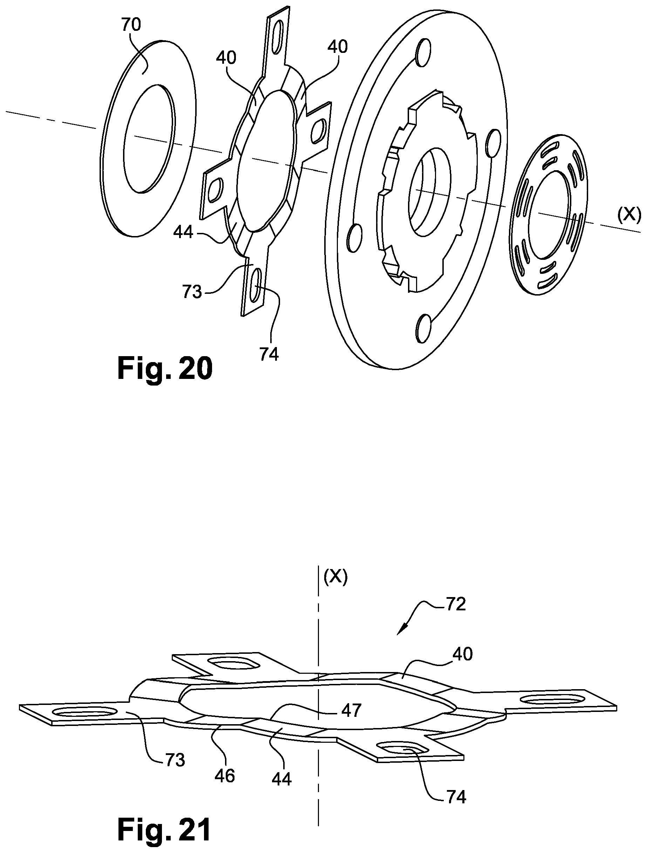

Comme on peut le voir notamment sur la figure 21, la portion 44 de la rondelle 72 s'étendant autour de l'axe est ici ondulée, de sorte que la position axiale de cette portion 44 de la rondelle varie angulairement. La rondelle 72 est par exemple mais de façon non limitative une rondelle de type Onduflex™. Selon cette deuxième variante, les différentes ondulations de la portion 44 forment une succession de rampes 40. Ces rampes 40 font par exemple saillie en direction du composant primaire 15 et du composant secondaire 25 du batteur 14. La face de la rondelle 72 en regard de ces composants primaire 15 et secondaire 25 présente par exemple une forme convexe au niveau de chaque rampe 40.

Les rampes 40 coopèrent selon cette deuxième variante avec des contre-rampes 41 ménagées dans le composant primaire 15 du batteur 14, similairement à ce qui a déjà été décrit en référence à la première variante du premier exemple de mise en œuvre de l'invention et représenté notamment à la figure 7. La pièce de frottement 70 permet selon cette deuxième variante du premier exemple de mise en œuvre de l'invention de comprimer la portion ondulée 44 de la rondelle 72.

L'invention n'est pas limitée à l'exemple qui vient d'être décrit.

On peut par exemple combiner ensemble des caractéristiques décrites en références à des variantes ou des exemples de mise en œuvre différents.

La rondelle ondulée 72 selon les figures 18 à 21 peut par exemple coopérer avec des contre-rampes formées sur une pièce de frottement 70, similairement à ce qui a été décrit en référence aux figures 8 à 17. Le disque de friction 1 peut dans des variantes non représentées, être dépourvu d'amortisseur de torsion autre que le batteur 14, auquel cas le support 6 des garnitures de friction 9 est solidaire en rotation du moyeu 2.

Le batteur 14 décrit précédemment peut également être associé à d'autres composants d'un système de transmission qu'un disque de friction pour embrayage, par exemple à un convertisseur de couple hydrodynamique ou un double volant amortisseur ou une inertie primaire tel qu'un volant.

## Revendications

1. Dispositif d'amortissement d'oscillations de torsion (14) à unique fréquence de résonance pour composant d'un système de transmission, le dispositif (14) étant destiné à être disposé hors du chemin emprunté par le couple transmis par ce composant, le dispositif comprenant :
- un composant primaire (15) et un composant secondaire (25), mobile en rotation autour d'un axe (X) par rapport au composant primaire (15) contre une force de rappel élastique, et
- un système de génération d'hystérésis (40, 41) pour le déplacement du composant secondaire (25) par rapport au composant primaire (15), ledit système comprenant au moins une rampe (40) portée par une pièce (42, 62, 72) solidaire du composant secondaire (25) et interagissant par frottement avec une contre-rampe (41) lors de la rotation du composant secondaire (25) par rapport au composant primaire (15)
la pièce solidaire du composant secondaire portant la rampe (40) étant une rondelle (42, 62, 72) **caractérisé par le fait que** cette rondelle (42, 62, 72) est disposée axialement au-delà du composant secondaire (25) et du composant primaire (15).

2. Dispositif selon la revendication 1, la rondelle (42, 72) portant la rampe (40) comprenant une portion (44) s'étendant, notamment continûment, autour de l'axe (X) et une pluralité de bras radiaux (45, 73) s'étendant depuis ladite portion (44).

3. Dispositif selon la revendication 2, chaque bras radial (45) faisant saillie radialement vers l'axe de rotation (X) et comprenant une extrémité libre portant une rampe (40), ou
chaque bras radial (73) faisant saillie radialement en éloignement de l'axe de rotation (X) et la portion (44) de la rondelle (42) présentant des ondulations définissant des rampes (40) se succédant angulairement.

4. Dispositif selon la revendication 1, la rondelle (62) portant la rampe (40) étant dépourvue de bras radiaux et cette rondelle (62) présentant une zone centrale évidée, cette zone centrale contenant l'axe de rotation (X)., plusieurs rampes (40) étant notamment portées par la rondelle (62), ces rampes se succédant alors angulairement.

5. Dispositif selon l'une quelconque des revendications précédentes, la contre-rampe (41) étant ménagée dans le composant primaire (15) du dispositif (14), plusieurs contre-rampes (41) se succédant angulairement étant notamment ménagées dans le composant primaire (15) du dispositif (14).

6. Dispositif selon l'une quelconque des revendications 1 à 5, la contre-rampe (41) étant ménagée dans une pièce de frottement (70), la rondelle (62, 72) étant disposée axialement entre le composant secondaire (25) et cette pièce de frottement (70), plusieurs contre-rampes (41) se succédant angulairement étant notamment ménagées dans la pièce de frottement (70).

7. Dispositif selon l'une quelconque des revendications précédentes, comprenant une pluralité d'organes de rappel élastiques (22) disposés entre le composant primaire (15) et le composant secondaire (25), de manière à générer la force de rappel élastique s'opposant à la rotation du composant secondaire (25) par rapport au composant primaire (15), chaque organe de rappel élastique (22) s'étendant entre deux extrémités présentant une portion radialement intérieure apte à venir en appui contre une paroi du composant primaire (15) et une portion radialement extérieure apte à venir en appui contre une paroi (28) d'un nez radial (29) du composant secondaire (25), chaque nez radial (29) du composant secondaire (25) s'étendant angulairement entre deux parois (28) dudit nez (29) et seule une de ces parois (28) étant en regard d'un organe de rappel élastique (22) et apte à venir au contact de ce dernier.

8. Dispositif selon l'une quelconque des revendications précédentes, la rampe (40) étant en permanence solidaire du composant secondaire (25) du dispositif d'amortissement d'oscillations de torsion (14) et la contre-rampe (41) étant en permanence solidaire du composant primaire (15) du dispositif d'amortissement d'oscillations de torsion (14).

9. Disque de friction (1) pour embrayage, comprenant :
- au moins une garniture de friction (9) définissant une entrée en couple,
- un moyeu (2) mobile en rotation autour de l'axe (X) de rotation du composant secondaire (25), et définissant une sortie en couple,
- le dispositif d'amortissement d'oscillations de torsion (14) selon l'une quelconque des revendications précédentes, étant porté par le moyeu (2) et disposé hors du chemin emprunté par le couple transmis par le disque (1) entre l'entrée en couple et la sortie en couple.

10. Disque selon la revendication 9, le dispositif d'amortissement (14) étant selon la revendication 6, la pièce de frottement (70) étant montée sur le moyeu (2), étant notamment solidaire en rotation du composant primaire (15) du dispositif d'amortissement d'oscillations de torsion (14).

11. Disque selon la revendication 9 ou 10, comprenant un limiteur de couple (30, 50) disposé de manière à exercer une force de frottement sur le dispositif d'amortissement d'oscillations de torsion (14), cette force maintenant le composant primaire (15) du dispositif (14) solidaire en rotation du moyeu (2) tant que le couple exercé par le dispositif (14) sur le limiteur de couple (30, 50) est inférieur à une valeur prédéfinie,
le limiteur de couple (30) étant notamment disposé :
- de manière à exercer une force de frottement uniquement radiale sur le dispositif d'amortissement d'oscillations de torsion (14) ou
- de manière à exercer une force de frottement uniquement axiale sur le dispositif d'amortissement d'oscillations de torsion (14).

12. Disque selon la revendication 11, le limiteur de couple (50) étant configuré pour former une butée pour le déplacement axial du dispositif d'amortissement d'oscillations de torsion (14) en éloignement de la garniture de friction (9).

13. Disque selon l'une quelconque des revendications 9 à 12, le moyeu (2) définissant au moins un épaulement (71) configuré pour former une butée pour le déplacement axial du dispositif d'amortissement d'oscillations de torsion (14) en rapprochement de la garniture de friction (9).

14. Disque de friction selon l'une quelconque des revendications 9 à 13, comprenant un support (6) de garniture(s) de friction (9) mobile en rotation par rapport au moyeu (2) et un amortisseur d'oscillations de torsion (12), autre que le dispositif d'amortissement d'oscillations de torsion (14), disposé entre le support (6) et le moyeu (2) et s'opposant à la rotation du support (6) par rapport au moyeu (2).

## Patentansprüche

1. Vorrichtung zur Dämpfung von Torsionsschwingungen (14) mit einer einzigen Resonanzfrequenz für eine Komponente eines Kraftübertragungssystems, wobei die Vorrichtung (14) dazu bestimmt ist, außerhalb des Weges angeordnet zu werden, der von dem Drehmoment genommen wird, das von dieser Komponente übertragen wird, wobei die Vorrichtung umfasst
- eine primäre Komponente (15) und eine sekundäre Komponente (25), die um eine Achse (X) in Bezug auf die primäre Komponente (15) gegen eine elastische Rückholkraft drehbeweglich ist, und
- ein System zur Hystereseerzeugung (40, 41) für die Verlagerung der sekundären Komponente (25) in Bezug auf die primäre Komponente (15), wobei das System wenigstens eine Rampe (40) umfasst, die von einem mit der sekundären Komponente (25) fest verbundenen Teil (42, 62, 72) getragen wird und während der Drehung der sekundären Komponente (25) in Bezug auf die primäre Komponente (15) durch Reibung mit einer Gegenrampe (41) interagiert,
wobei das mit der sekundären Komponente fest verbundene Teil, das die Rampe (40) trägt, eine runde Scheibe (42, 62, 72) ist, **dadurch gekennzeichnet, dass** diese runde Scheibe (42, 62, 72) axial jenseits der sekundären Komponente (25) und der primären Komponente (15) angeordnet ist.

2. Vorrichtung nach Anspruch 1, wobei die runde Scheibe (42, 72), welche die Rampe (40) trägt, einen Abschnitt (44), der sich, insbesondere durchgehend, um die Achse (X) herum erstreckt, und mehrere radiale Arme (45, 73), die sich vom Abschnitt (44) aus erstrecken, umfasst.

3. Vorrichtung nach Anspruch 2, wobei jeder radiale Arm (45) radial zur Drehachse (X) hin vorsteht und ein freies Ende umfasst, das eine Rampe (40) trägt, oder jeder radiale Arm (73) radial von der Drehachse (X) weg vorsteht und der Abschnitt (44) der runden Scheibe (42) Wellungen aufweist, die Rampen (40) definieren, die in Winkelrichtung aufeinanderfolgen.

4. Vorrichtung nach Anspruch 1, wobei die runde Scheibe (62), welche die Rampe (40) trägt, nicht mit radialen Armen versehen ist und diese runde Scheibe (62) einen ausgesparten zentralen Bereich aufweist, wobei dieser zentrale Bereich die Drehachse (X) enthält, wobei mehrere Rampen (40) insbesondere von der runden Scheibe (62) getragen werden, wobei diese Rampen dann in Winkelrichtung aufeinanderfolgen.

5. Vorrichtung nach einem der vorhergehenden Ansprüche, wobei die Gegenrampe (41) in der primären Komponente (15) der Vorrichtung (14) ausgebildet ist, wobei mehrere Gegenrampen (41), die in Winkelrichtung aufeinanderfolgen, insbesondere in der primären Komponente (15) der Vorrichtung (14) ausgebildet sind.

6. Vorrichtung nach einem der Ansprüche 1 bis 5, wobei die Gegenrampe (41) in einem Reibungselement (70) ausgebildet ist, wobei die runde Scheibe (62, 72) axial zwischen der sekundären Komponente (25) und diesem Reibungselement (70) angeordnet ist, wobei mehrere Gegenrampen (41), die in Winkelrichtung aufeinanderfolgen, insbesondere in dem Reibungselement (70) angeordnet sind.

7. Vorrichtung nach einem der vorhergehenden Ansprüche, welche mehrere elastische Rückholorgane (22) umfasst, die zwischen der primären Komponente (15) und der sekundären Komponente (25) so angeordnet sind, dass sie die elastische Rückholkraft erzeugen, die der Drehung der sekundären Komponente (25) in Bezug auf die primäre Komponente (15) entgegenwirkt, wobei sich jedes elastische Rückholorgan (22) zwischen zwei Enden erstreckt, die einen radial inneren Abschnitt aufweisen, der geeignet ist, an einer Wand der primären Komponente (15) zur Anlage zu kommen, und einen radial äußeren Abschnitt, der geeignet ist, an einer Wand (28) einer radialen Nase (29) der sekundären Komponente (25) zur Anlage zu kommen, wobei sich jede radiale Nase (29) der sekundären Komponente (25) in Winkelrichtung zwischen zwei Wänden (28) der Nase (29) erstreckt und nur eine dieser Wände (28) sich gegenüber einem elastischen Rückholorgan (22) befindet und geeignet ist, mit diesem Letzteren in Kontakt zu kommen.

8. Vorrichtung nach einem der vorhergehenden Ansprüche, wobei die Rampe (40) dauerhaft mit der sekundären Komponente (25) der Vorrichtung zur Dämpfung von Torsionsschwingungen (14) fest verbunden ist und die Gegenrampe (41) dauerhaft mit der primären Komponente (15) der Vorrichtung zur Dämpfung von Torsionsschwingungen (14) fest verbunden ist.

9. Reibscheibe (1) für eine Kupplung, welche umfasst:
- wenigstens einen Reibbelag (9), der einen Drehmomenteingang definiert,
- eine Nabe (2), die um die Drehachse (X) der sekundären Komponente (25) drehbeweglich ist und einen Drehmomentausgang definiert,
- die Vorrichtung zur Dämpfung von Torsionsschwingungen (14) nach einem der vorhergehenden Ansprüche, die von der Nabe (2) getragen wird und außerhalb des Weges angeordnet ist, der von dem Drehmoment genommen wird, das von der Scheibe (1) zwischen dem Drehmomenteingang und dem Drehmomentausgang übertragen wird.

10. Scheibe nach Anspruch 9, wobei die Dämpfungsvorrichtung (14) eine Vorrichtung nach Anspruch 6 ist, wobei das Reibungselement (70) auf der Nabe (2) angebracht ist, die insbesondere mit der primären Komponente (15) der Vorrichtung zur Dämpfung von Torsionsschwingungen (14) drehfest verbunden ist.

11. Scheibe nach Anspruch 9 oder 10, welche einen Drehmomentbegrenzer (30, 50) umfasst, welcher derart angeordnet ist, dass er eine Reibungskraft auf die Vorrichtung zur Dämpfung von Torsionsschwingungen (14) ausübt, wobei diese Kraft die primäre Komponente (15) der Vorrichtung (14) mit der Nabe (2) drehfest verbunden hält, solange das Drehmoment, das von der Vorrichtung (14) auf den Drehmomentbegrenzer (30, 50) ausgeübt wird, kleiner als ein vordefinierter Wert ist,
wobei der Drehmomentbegrenzer (30) insbesondere angeordnet ist:
- derart, dass er eine ausschließlich radiale Reibungskraft auf die Vorrichtung zur Dämpfung von Torsionsschwingungen (14) ausübt, oder
- derart, dass er eine ausschließlich axiale Reibungskraft auf die Vorrichtung zur Dämpfung von Torsionsschwingungen (14) ausübt.

12. Scheibe nach Anspruch 11, wobei der Drehmomentbegrenzer (50) dafür ausgelegt ist, einen Anschlag für die axiale Verlagerung der Vorrichtung zur Dämpfung von Torsionsschwingungen (14) vom Reibbelag (9) weg zu bilden.

13. Scheibe nach einem der Ansprüche 9 bis 12, wobei die Nabe (2) wenigstens einen Absatz (71) definiert, der dafür ausgebildet ist, einen Anschlag für die axiale Verlagerung der Vorrichtung zur Dämpfung von Torsionsschwingungen (14) bei Annäherung an den Reibbelag (9) zu bilden.

14. Reibscheibe nach einem der Ansprüche 9 bis 13, welche einen Träger (6) des Reibbelags (der Reibbeläge) (9), der bezüglich der Nabe (2) drehbeweglich ist, und einen von der Vorrichtung zur Dämpfung von Torsionsschwingungen (14) verschiedenen Torsionsschwingungsdämpfer (12), der zwischen dem Träger (6) und der Nabe (2) angeordnet ist und der Drehung des Trägers in Bezug auf die Nabe (2) entgegenwirkt, umfasst.

## Claims

1. Device (14) for damping torsional oscillations, having a single resonant frequency, for a component of a transmission system, the device (14) being intended to be positioned away from the path followed by the torque transmitted by this component, the device comprising:
- a primary component (15) and a secondary component (25), which is capable of rotational movement about an axis (X) with respect to the primary component (15) against an elastic return force, and
- a hysteresis generating system (40, 41) for moving the secondary component (25) with respect to the primary component (15), the said system comprising at least one ramp (40) borne by a part (42, 62, 72) secured to the secondary component (25) and interacting frictionally with a counter-ramp (41) as the secondary component (25) rotates with respect to the primary component (15),
the part secured to the secondary component bearing the ramp (40) being a washer (42, 62, 72), **characterized in that** this washer (42, 62, 72) is positioned axially beyond the secondary component (25) and the primary component (15).

2. Device according to Claim 1, the washer (42, 72) bearing the ramp (40) comprising a portion (44) extending, notably continuously, about the axis (X) and a plurality of radial arms (45, 73) extending from the said portion (44).

3. Device according to Claim 2, each radial arm (45) projecting radially towards the axis of rotation (X) and comprising a free end bearing a ramp (40), or each radial arm (73) projecting radially away from the axis of rotation (X) and the portion (44) of the washer (42) having undulations defining ramps (40) angularly succeeding one another.

4. Device according to Claim 1, the washer (62) bearing the ramp (40) being devoid of radial arms and this washer (62) having a hollowed-out central zone, this central zone containing the axis of rotation (X), several ramps (40) notably being borne by the washer (62), these ramps then angularly succeeding one another.

5. Device according to any one of the preceding claims, the counter-ramp (41) being formed in the primary component (15) of the device (14), several counter-ramps (41) angularly succeeding one another notably being formed in the primary component (15) of the device (14).

6. Device according to any one of Claims 1 to 5, the counter-ramp (41) being formed in a friction component (70), the washer (62, 72) being arranged axially between the secondary component (25) and this friction component (70), several counter-ramps (41) angularly succeeding one another notably being formed in the friction component (70).

7. Device according to any one of the preceding claims, comprising a plurality of elastic return members (22) arranged between the primary component (15) and the secondary component (25) so as to generate the elastic return force that opposes the rotation of the secondary component (25) with respect to the primary component (15), each elastic return member (22) extending between two ends having a radially interior portion able to come to bear against a wall of the primary component (15) and a radially exterior portion able to come to bear against a wall (28) of a radial snout (29) of the secondary component (25), each radial snout (29) of the secondary component (25) extending angularly between two walls (28) of the said snout (29) and just one of these walls (28) facing an elastic return member (22) and being able to come into contact therewith.

8. Device according to any one of the preceding claims, the ramp (40) being permanently secured to the secondary component (25) of the torsional oscillations damping device (14) and the counter-ramp (41) being permanently secured to the primary component (15) of the torsional oscillations damping device (14).

9. Friction disc (1) for a clutch, comprising:
- at least one friction lining (9) defining a torque input,
- a hub (2) capable of rotational movement about the axis (X) of rotation of the secondary component (25) and defining a torque output,
- the torsional oscillations damping device (14) according to any one of the preceding claims, being borne by the hub (2) and positioned away from the path followed by the torque transmitted by the disc (1) between the torque input and the torque output.

10. Disc according to Claim 9, the damping device (14) being according to Claim 6, the friction component (70) being mounted on the hub (2), notably being rotationally secured to the primary component (15) of the torsional oscillations damping device (14).

11. Disc according to Claim 9 or 10, comprising a torque limiter (30, 50) arranged in such a way as to create a friction force on the torsional oscillations damping device (14), this force keeping the primary component (15) of the device (14) secured in terms of rotation to the hub (2) as long as the torque exerted by the device (14) on the torque limiter (30, 50) is below a predefined value,
the torque limiter (30) notably being arranged:
- so as to exert a purely radial friction force on the torsional oscillations damping device (14), or
- so as to exert a purely axial friction force on the torsional oscillations damping device (14).

12. Disc according to Claim 11, the torque limiter (50) being configured to form an end stop for the axial movement of the torsional oscillations damping device (14) in the direction away from the friction lining (9).

13. Disc according to any one of Claims 9 to 12, the hub (2) defining at least one shoulder (71) configured to form an end stop for the axial movement of the torsional oscillations damping device (14) towards the friction lining (9).

14. Friction disc according to any one of Claims 9 to 13, comprising a support (6) for friction lining(s) (9) that is capable of rotational movement with respect to the hub (2) and a torsional oscillations damper (12), other than the torsional oscillations damping device (14), which is arranged between the support (6) and the hub (2) and opposes the rotation of the support (6) with respect to the hub (2).
